(19) Europäisches Patentamt
European Patent Office
Office européen des brevets

(11) EP 0 952 126 A1

(12) **EUROPÄISCHE PATENTANMELDUNG**

(43) Veröffentlichungstag:
**27.10.1999 Patentblatt 1999/43**

(51) Int. Cl.$^{6}$: **C04B 41/49**, C07F 7/18

(21) Anmeldenummer: **99107246.3**

(22) Anmeldetag: **14.04.1999**

(84) Benannte Vertragsstaaten:
**AT BE CH CY DE DK ES FI FR GB GR IE IT LI LU MC NL PT SE**
Benannte Erstreckungsstaaten:
**AL LT LV MK RO SI**

(30) Priorität: **17.04.1998 DE 19816973**

(71) Anmelder:
**Degussa-Hüls Aktiengesellschaft**
**45764 Marl (DE)**

(72) Erfinder:
- **Göbel, Thomas Dr.**
**63457 Hanau (DE)**
- **Lortz,Wolfgang Dr.**
**63607 Wächtersbach (DE)**
- **Littmann, Klaus Dr.**
**52511 Geilenkirchen (DE)**
- **Gerhard-Abozari, Eva Dr.**
**52070 Aachen (DE)**

(54) **Verfahren zur Imprägnierung von mineralischen Baustoffen und dafür geeignete Organosiliciumverbindungen**

(57) Die Erfindung betrifft ein Verfahren zur Imprägnierung und hydrophoben Ausstattung von mineralischen Baustoffen unter Verwendung von Organosiliciumverbindungen, insbesondere Bis(triethoxysilylpropyl)disulfan, die zu einer erhöhten Steinfestigkeit führt.

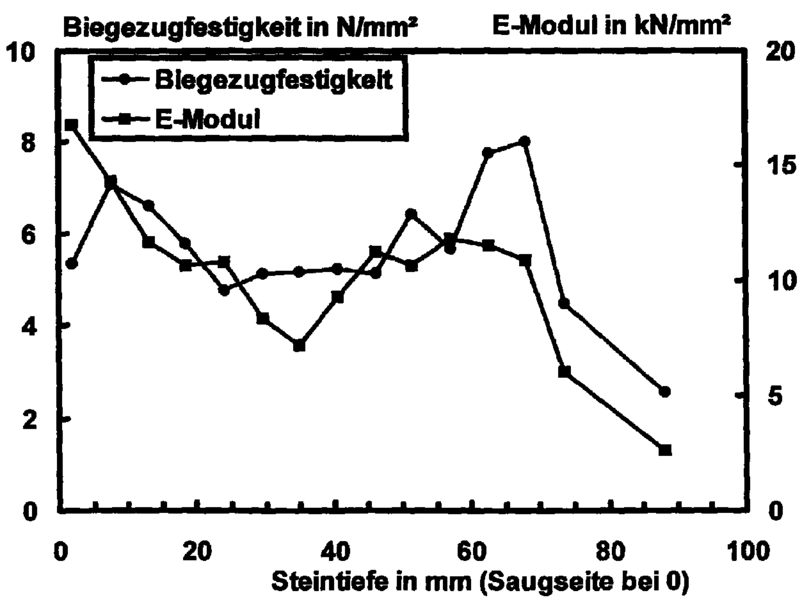


Bild 2: Biegezugfestigkeit und Elastizitätsmodul von Ebenheider Sandstein, mit Bis(triethoxysilylpropyl)disulfan (Wirkstoffgehalt: 50 %)getränkt

EP 0 952 126 A1

## Beschreibung

Die Erfindung betrifft ein Verfahren zur Imprägnierung und hydrophoben Ausstattung von mineralischen Baustoffen unter Verwendung von Organosiliciumverbindungen und die für diesen Zweck geeigneten Verbindungen.

Aus dem Stand der Technik sind seit langem Alkylalkoxysilane, gelöst in organischen Lösungsmitteln (DE-PS 2029446) oder auch in Form von wäßrigen Emulsionen (EP-B-0538555) bekannt, die man zur Steinkonservierung einsetzt.

Im Gegensatz zu den auf Kohlenstoffpolymeren beruhenden Produkten finden diese Substanzen ein hohe Akzeptanz, da die ausgehärteten Produkte anorganischer Natur sind. Die für den Einsatz zur hydrophobierenden Behandlung von Baustoffen bekannten Alkylalkoxysilane weisen allerdings einige wesentliche Nachteile auf:

- Die daraus entstehenden Aushärtungsprodukte liegen scherbenartig im Porenraum des porösen Baustoffes. Dadurch festigen sie zwar den Baustoff, bilden aber keinen homogenen Schutz vor Umwelteinflüssen und vor weiterer Verwitterung.

- Die scherbenartigen Aushärtungsprodukte bilden im porösen Baustoff ein sekundäres Kapillarporensystem. Dieses kann die Wasseraufnahme des Baustoffes negativ beeinflussen.

- Bekannte Kieselsäureester führen nicht zu hydrophoben Eigenschaften der Baustoffe. Hydrophobierende Bestandteile müssen zugemischt werden und trennen sich gegebenfalls während der Applikation auf dem Baustoff von dem Wirkstoff ab.

Die genannten Faktoren führen zu einer Verringerung der Dauerhaftigkeit der Imprägnierung und sind als nachteilig zu bewerten.

Bekannt sind ebenfalls filmbildende, mit Organosilanen modifizierte PUR-Systeme, die die Baumaterialien nicht versiegeln und die Porenkanäle offen lassen. Sowohl das Bindemittel als auch die Mineralkörner des Baustoffes werden mit einem lückenlosen Fim überzogen und somit vor aus der Umwelt eindringenden Schadgasen oder schadstoffhaltigen Flüssigkeiten geschützt. Von besonderer Bedeutung ist hierbei, daß nennenswerte Änderungen der Wasserdampfdiffusionseigenschaften nicht auftreten, da die großen kapillaren Porenkanäle offen bleiben.
Nachteilig ist die starke Oberflächenhydrophobie, die gegebenenfalls durchzuführende Nachfolgemaßnahmen behindert (Aufbringen von Mörtel, Steinersatzstoff etc.).

Eine grundsätzliche Erläuterung dieses Schutzprinzips findet sich bei:
*Sasse, H.R.; Honsinger, D; Puterman, M.: The Aachen*
*Concept: A New Technology in Stone Impregnation. Hyderabad, India: Birla Institute of Scientific Research, 1991- In: 1 International Colloquium*
*Role of Chemistry in Archaeology, 15.-18. November, 1991, (Ganorkar, M.C.; Rao, N.R. (Ed)), S. 87-94*

Aufgabe der Erfindung ist es, die Vorteile der bei der Anwendung von Kieselsäureestern gefundenen Eigenschaften mit dem Schutzprinzip der Filmbildung zu verbinden.

Gegenstand der Erfindung sind zur Imprägnierung von mineralischen Baustoffen geeignete Organosilicumverbindungen der allgemeinen Formel

$$((R_1O)_{3-a}\overset{(R_2)_a}{\overset{|}{-Si}} - (CH_2)_b - X\ (CH_2)_c - \overset{(R_3)_d}{\overset{|}{Si}} - (R_4O)_{3-d} \qquad (I),$$

oder deren Mischungen
mit

- $R_1$: $C_1$-$C_6$-Alkyl, geradkettig oder verzweigt, bevorzugt $C_1$- oder $C_2$-Alkyl,
- $R_2$: $C_1$-$C_{20}$-Alkyl, geradkettig oder verzweigt, insbesondere $C_1$-$C_{16}$-Alkyl, Phenyl
- $R_3$: $C_1$-$C_{20}$-Alkyl, geradkettig oder verzweigt, insbesondere $C_1$-$C_{16}$-Alkyl, Phenyl
- $R_4$: $C_1$-$C_6$-Alkyl, geradkettig oder verzweigt, bevorzugt $C_1$- oder $C_2$-Alkyl,
- X: $S_x$ (mit x:0, 1-12), $CH_2$, $(OCH_2CH_2)_eO$ (mit e=1 bis 20), OR'O (mit R'=$C_1$-$C_{20}$-Alkyl, geradkettig oder verzweigt), NH, NHCONH-R''-NHCONH (mit R'' = $C_1$-$C_{20}$-Alkylen

a: 0, 1, 2
b: 1 bis 18, insbesondere 1 bis 8
c: 1 bis 18, insbesondere 1 bis 8
d: 0, 1, 2

wobei $a + d \leq 3$ ist, und b denselben Wert wie c besitzt, oder Mischungen dieser Verbindungen, die gegebenfalls zusätzlich ein geeignetes organisches Lösungsmittel und gegebenenfalls ein oder mehrere Alkylalkoxysilane der allgemeinen Formel

$$((R_1O)_{3-a}\overset{\overset{\displaystyle (R_2)_a}{|}}{Si} - (CH_2)_b - Y \qquad (II)$$

mit

$R_1$: $C_1$-$C_6$-Alkyl, geradkettig oder verzweigt bevorzugt $C_1$ oder $C_6$-Alkyl
$R_2$: $C_1$-$C_{20}$-Alkyl,geradkettig oder verzweigt, insbesondere $C_1$-$C_2$ Alkyl, Phenyl
Y: H, Aryl, Alkenyl, insbesondere Phenyl oder $C_1$ bis $C_6$ Alkenyl,
a: 0, 1, 2
b: 1 bis 18, insbesondere 1 bis 8,

enthalten.

Bevorzugt werden Verbindungen der allgemeinen Formel (I) eingesetzt, in denen X für $S_x$ und insbesondere x für 2 stehen, insbesondere Bis(trialkoxysilylpropyl)disulfan. Verwendet man Mischungen von Organosiliciumverbindungen, enthalten diese bevorzugt die Verbindungen gemäß den Formeln (I) und (II) in den Gewichtsverhältnissen von 1 : 1 bis 100 : 1, insbesondere 3 : 1 bis 20 : 1.

Als katalytisch wirkende Verbindung sind alle üblichen Verbindungen geeignet, die Veresterungen, Umesterungen oder Hydrolyse von Silanen katalysieren, wie z. B. Dibutylzinnlaurat, Dimethylzinndineodecanoat, Dioctylzinndineodecanoat oder Tetrabutyltitanat.

Die Katalysatorkonzentration liegt bei 0,05 bis 5 Gew.-%, bezogen auf die Gesamtsilanmenge in der Mischung. Bevorzugt wird eine Katalysatorkonzentration von ~ 1 Gew.-%.

Die Imprägniersubstanzen werden gegebenenfalls verdünnt durch organische Lösungsmittel auf die Baustoffe ein- oder mehrfach aufgetragen.
Dies hängt von der Porosität und den gewünschten, mechanischen Eigenschaften der zu schützenden und zu verfestigenden Steinmaterialien ab.
Als Lösungsmittel geeignet sind insbesondere Alkohole, wie z. B. Ethanol,, Isopropanol, Diacetonalkohol, Methanol oder Ketone, wie z. B. Aceton, Methylisobutylketon, Methylethylketon oder Ester, wie z. B. Butylacetat, 3-Methoxypropylacetat, Ethylacetat.

Als besonders geeignet hat sich das Butylacetat erwiesen. Das Lösungsmittel ist, wenn vorhanden, in einer Menge von 30 bis 95 Gew.-% bevorzugt 50 bis 80 Gew.-% in der Mischung mit den Organosiliciumverbindungen zu finden.

Bestandteil der erfindungsgemäßen Mischungen sind gegebenfalls auch Oligomere, insbesondere Dimere der Verbindungen gemäß den Formeln (I) und (II). Bis zu einer Menge von 15 Gew.-% insbesondere von 10 Gew.-%, bezogen auf die Verbindungen der jeweiligen Formeln (I) oder (II), hat sich kein nachteiliger Effekt gezeigt.
Die Mischungen enthalten gegebenenfalls auch im Bautenschutzbereich üblicherweise verwendete Organopolysiloxane, insbesondere amino- und/oder ammoniumfunktionelle Organopolysiloxane in einer Menge von >0 bis 30 Gew.-%, bezogen auf die Menge der Verbindungen gemäß den Formeln (I) und (II).

Bei den zu schützenden Materalien handelt es sich insbesondere um natürliche Materialien, wie z. B. Sandstein, Kalkstein, Muschelkalk.

Wichtigstes Kriterium der Wirksamkeit der beschriebenen, elastifizierten Kieselsäureester ist die Erhöhung der Steinfestigkeit. In den äußeren Zonen verwitterter Stein muß bis in eine Tiefe, in der ungeschädigte Substanz vorliegt, gefestigt werden können.

Die Untersuchungen zeigen, daß bei dem erfindungsgemäßen Vorgehen die Festigkeit im gesamten in Betracht zu ziehenden Steinbereich angehoben wird.

Die Festigung erfolgt im Vergleich zu den bekannten Kieselsäureestern nicht nur weiter in den Stein hinein, sondern auch moderater. Dies ist so zu verstehen, daß die Anstiege von Festigkeit und E-Modul weniger steil erfolgen.

Schädigungen des behandelten Materials aufgrund von Temperatur- oder Feuchtigkeitsschwankungen treten daher bei dem erfindungsgemäß behandelten Material praktisch nicht auf.

Insbesondere die scherbenartige Aushärtung der nach dem Stand der Technik imprägnierten Materialien hatte zu diesen Schädigungen geführt.

Die nach dem Stand der Technik eingesetzten Kieselsäureester dringen im allgemeinen z. B. in Sandstein nur bis zu einer Tiefe von maximal 40 mm ein.
Dies hat natürlich Auswirkungen auf die Biegefestigkeit und den Elastizitätsmodul der so behandelten mineralischen Baustoffe.
Oberhalb dieser Eindringtiefen finden sich dann im Prinzip die Werte für den unbehandelten Baustoff.

Da die erfindungsgemäß eingesetzten Verbindungen gemäß den Formeln (I) und gegebenenfalls (II) tiefer in das Material eindringen, zeigen sich erfindungsgemäß deutlich bessere Ergebnisse.

Beispiele

1. Verwendete Materialien

   1.1. Tetraethoxysilan, vorkondensiert (Stand der Technik)

   1.2. Lösung von 50 Gew.-% Bis(triethoxysilylpropyl)-disulfan und 0,5 Gew.-% Dibutylzinndilaurat in Butylacetat

   1.3. Lösung von 25 Gew.-% Bis(triethoxysilylpropyl)-disulfan und 0,25 Gew.-% Dibutylzinndilaurat in Butylacetat

   1.4. Ebenheider Sandstein (EH)

   1.5. Sander Schilfsandstein (SS)

2. Meßmethoden

   2.1. Tränkung der Natursteinkörper
   Probekörper der Abmessungen 50 x 50 x 100 $mm^3$ aus Ebenheider Sandstein und Sander Schilfsandstein werden mit dem genannten Disulfan und dem vorkondensierten Tetraethoxysilan getrankt. Dazu werden die längsseitig (Flanken 100 x 50 $mm^2$) mit einem chemikalienbeständigen, undurchlässigen Epoxiharz versiegelten Probekörper mit einer Stirnseite in die Schutzstofflösung gestellt. Ein Abstandhalter sorgt dafür, daß die Steinoberfläche für die Schutzstoffe frei zugänglich ist, die Probekörper tauchen etwa 2 bis 3 mm 4 h in die Lösung ein. Nach dieser Zeit wird durch Differenzwägung die Aufnahmemenge bestimmt. Die getränkten Steine werden vier Wochen bei 23 ° C /50 % r. F. zur Aushärtung gelagert.

   2.2. Eindringtiefe der Organosilanverbindungen
   Zur Bestimmung der Eindringtiefe wird zum einen der bekannten Effekt herangezogen, daß sich Polymere in Gegenwart von Joddampf verfärben. Aus den oben beschriebenen Probekörpern erhält man durch Sägen („Längsschnitte")Steinscheiben 5 x 50 x 100 $mm^3$. Diese werden zusammen mit einer Petrischalte mit Jod in einen Glasexsikkator gelegt. Nach Verringerung des Drucks im Exsikkator zeigt sich nach etwa einer Stunde in den getränkten Bereich der Scheiben eine deutliche, braunviolette Anfärbung, deren Tiefe gemessen wird. Zusätzlich wird die Verteilung des Schutzstoffes im Stein nach der Tränkung und Aushärtung bestimmt. Parallelproben zu den oben beschriebenen Steinscheiben werden in Stücke der Abmessungen 5 x 5 x 50 $mm^3$ gebrochen.
   Diese Stücke werden zu Pulver zermahlen und der Schwefel- und Kohlenstoffgehalt dieser Proben durch einen thermisch-oxidativen Aufschluß und nachfolgende, quantitative Bestimmung der $SO_2$ bzw. $CO_2$-Konzentration (CS-Analysator) bestimmt. Daraus läßt sich für jeden Steinabschnitt eine Konzentration von Kohlenstoff und Schwefel in M.-% errechnen. Diese dienen als Wert für die Konzentration des polymeren Schutzstoffes im entsprechenden Steinabschnitt.

   2.3. Messung der Biegezugfestigkeit und des Elastizitätsmoduls
   Zur Bestimmung der mechanischen Kenngrößen Festigkeit und Elastizitätsmodul wurde die Biegezugfestigkeitsprüfung durchgeführt. Das Prüfverfahren lehnt sich an die in

*Prim, P.; Wittmann, F. H.:*
*„Methode des mesure de l'effet consolidant de produits des traitement de las pierre".*
*Lausanne: Presses Polytechniques Romanes-*
*In: Proceedings of the fifth International congress on deterioration and conservation of stone; Band 2* beschriebene Methode an.

Ausführliche Beschreibung von Meßergebnissen an Steinfestigungsmitteln getränkten Natursteinen finden sich in

*Lotzman, S.; Schwamborn, B.:*
*„Mechanische Kennwerte polymerimprägnierter Natursteine".*
*Berlin: Ernst & Sohn, 1995.*
*In: Jahresberichte Steinzerfall-Steinkonservierung, Band 5 - 1995, (Snethlage, R. (Ed.)), S. 95-103*

3. Ergebnisse

3.1. Eindringtiefe

Bild 1 zeigt die Eindringtiefe des Tetraethoxysilan (Punkt 1.1) im Vergleich zu der eines erfindungsgemäß eingesetzten Produkts in Ebenheider Sandstein und Sander Schilfsandstein.
Die erfindungsgemäß verwendeten Verbindungen weisen eine mehr als doppelt so hohe Eindringtiefe auf.

3.2. Biegezugfestigkeit und Elastizitätsmodul

Die Bestimmung der mechanischen Kennwerte nach der Anwendung der erfindungsgemäß einzusetzenden Organosiliciumverbindungen zeigt, daß eine Konsolidierung der Steine bis in Tiefen von ca. 80 mm erreicht werden kann.
Bild 2 zeigt die Biegezugfestigkeit und den Elastizitätsmodul von Ebenheider Sandstein, der mit Bis(triethoxysilylpropyl)-disulfan-Lösung mit einem Silan-Gehalt von 50 % entsprechend Punkt 2.1. getränkt wurde. Es ist deutlich zu erkennen, daß die Festigkeit im gesamten Steinbereich bis 70 mm Tiefe gegenüber dem Wert bei 90 mm deutlich angehoben ist.
Die bei 90 mm Tiefe ermittelten niedrigen Werte entsprechen denen für einen unbehandelten Stein, da die imprägnierend wirkende Mischung nicht bis in diese Tiefe eindringt.

In den Bildern 3 und 4 finden sich die vergleichenden Darstellungen von Elastizitätsmodul und Biegezugfestigkeit, wie man sie unter Verwendung der erfindungsgemäßen Verbindungen und dem aus dem Stand der Technik bekannten Tetraethoxysilan erhält. Die Bilder zeigen die Überlegenheit des neuen Verfahrens.
Zudem spiegeln sie die Eindringtiefe der verwendeten Verbindungen in dem behandelten Sandstein wieder.
So ist ab einer Eindringtiefe von 40 mm keine Wirksamkeit des Tetraethoxysilans mehr festzustellen. Aus den Graphiken kann man außerdem ablesen, daß die Festigung durch die erfindungsgemäßen Verbindungen nicht nur weiter in den Stein hinein, sondern auch moderater erfolgt. Die Festigkeits- und Elastizitätsmodulanstiege sind weniger steil als bei dem herkömmmlichen Produkt. Schädigungen des behandelten Steins durch Spannungen nach Temperatur- oder Feuchtigkeitswechseln können so vermieden werden.

## Patentansprüche

1. Zur Imprägnierung von mineralischen Baustoffen geeignete Organosiliciumverbindungen der allgemeinen Formel

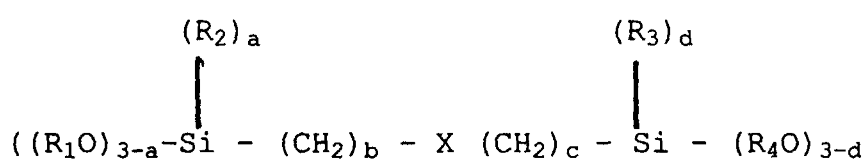

(I),

mit

$R_1$: $C_1$-$C_6$-Alkyl, geradkettig oder verzweigt
$R_2$: $C_1$-$C_{20}$-Alkyl, geradkettig oder verzweigt, insbesondere $C_1$-$C_{16}$-Alkyl, Phenyl
$R_3$: $C_1$-$C_{20}$-Alkyl, geradkettig oder verzweigt, insbesondere $C_1$-$C_{16}$-Alkyl, Phenyl
$R_4$: $C_1$-$C_6$-Alkyl, geradkettig oder verzweigt
X: $S_x$ (mit x 0 1-12), $CH_2$, $(OCH_2CH_2)_eO$ (mit e=1 bis 20) OR'O (mit R'=$C_1$-$C_{20}$-Alkyl, geradkettig oder ver-

zweigt), NH, NHCONH-R"-NHCONH (mit R" = $C_1$-$C_{20}$-Alkylen

a: 0, 1, 2
b: 1 bis 18
C: 1 bis 18
d: 0, 1, 2

wobei $a + d \leq 3$ ist,
oder Mischungen dieser Verbindungen, die gegebenfalls zusätzlich ein geeignetes organisches Lösungsmittel und gegebenenfalls ein oder mehrere Alkylalkoxysilane der allgemeinen Formel

$$((R_1O)_{3-a}\overset{(R_2)_a}{\overset{|}{-Si}} - (CH_2)_b - Y \qquad (II)$$

mit

$R_1$: $C_1$-$C_6$-Alkyl, geradkettig oder verzweigt
$R_2$: $C_1$-$C_{20}$-Alkyl,geradkettig oder verzweigt, insbesondere $C_1$-$C_2$ Alkyl, Phenyl
Y: H, Aryl, Alkenyl, insbesondere Phenyl oder $C_1$ bis $C_6$ Alkenyl,
a: 0, 1, 2
b: 1 bis 18

enthalten.

2. Organosiliciumverbindungen oder deren Mischungen gemäß Anspruch 1,
**dadurch gekennzeichnet,**
daß es sich um Verbindungen gemäß Formel (I) handelt, in der bedeuten

X: $S_x$,
x: 2
a,b: 1 bis 3, gleich oder verschieden
$R_1,R_2,R_3,R_4$: $C_1$ oder $C_2$-Alkyl

3. Mischungen gemäß Anspruch 1,
**dadurch gekennzeichnet,**
daß sie Verbindungen gemäß den Formeln (I) und (II) in den Gewichtsverhältnissen von 1 : 1 bis 100 : 1, insbesondere 3 : 1 bis 20 : 1 enthalten.

4. Organosiliciumverbindungen oder deren Mischungen gemäß einem oder mehreren der vorhergehenden Ansprüche,
**dadurch gekennzeichnet,**
daß sie Oligomere, insbesondere Dimere, der Verbindungen gemäß den Formeln (I) und/oder (II) in einer Menge von >0 bis 15 Gew.-%, bezogen auf die Gesamtmenge der Organosiliciumverbindungen (I) und (II) enthalten.

5. Organosiliciumverbindungen oder deren Mischungen nach einem oder mehreren der vorhergehenden Ansprüche,
**dadurch gekennzeichnet,**
daß sie zusätzlich Organopolysiloxane in einer Menge von 0 bis 30 Gew.-% enthalten.

6. Mischungen gemäß den Ansprüchen 1 bis 5,
**dadurch gekennzeichnet,**
daß sie eine die Umesterung oder Hydrolyse katalysierende Verbindung in einer Menge von 0,05 bis 5 Gew.-%, bezogen auf die Gesamtmenge der Organosiliciumverbindungen, enthalten.

7. Mischungen gemäß Anspruch 6,

**dadurch gekennzeichnet,**
daß sie als katalysierende Verbindung enthalten: Dibutylzinndilaurat, Dimethylzinndineodecanoat, Dioctylzinndineodecanoat oder Tetrabutyltitanat.

8. Mischungen gemäß den Ansprüchen 1 bis 7,
**dadurch gekennzeichnet,**
daß sie organische Lösungsmittel in einer Menge von 30 bis 95 Gew. -% enthalten, bezogen auf die Menge der in der Mischung enthaltenen Organosiliciumverbindungen.

9. Verwendung von Mischungen gemäß den Ansprüchen 1 bis 8 zur Imprägnierung und hydrophobierenden Behandlung von mineralischen Baustoffen synthetischer oder natürlicher Herkunft.

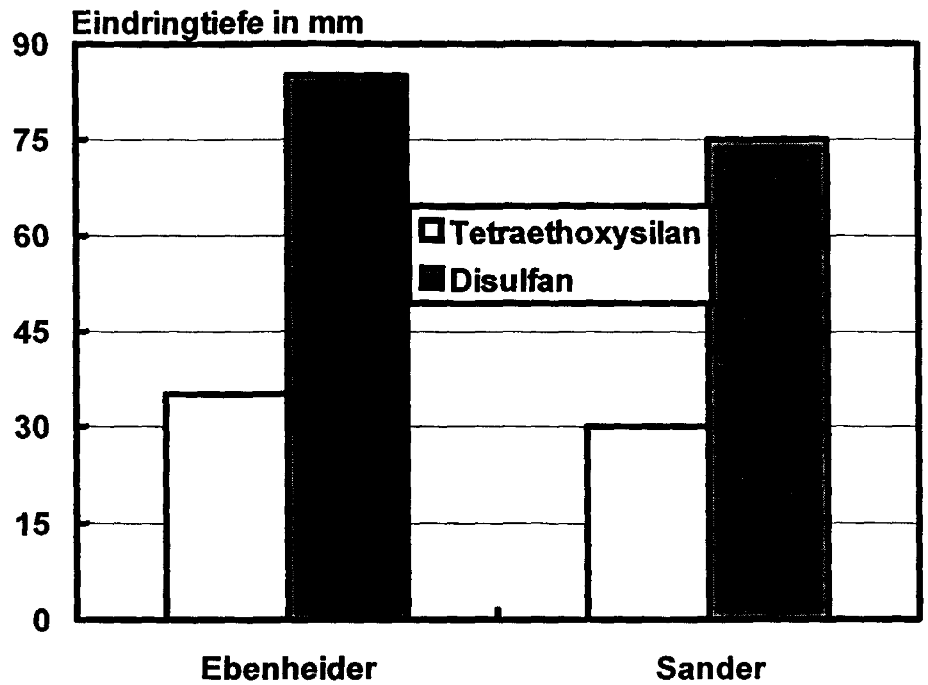


Bild 1: Eindringtiefe von Bis(triethoxysilylpropyl)disulfan und Tetraethoxysilan in Ebenheider und Sander Schilfsandstein

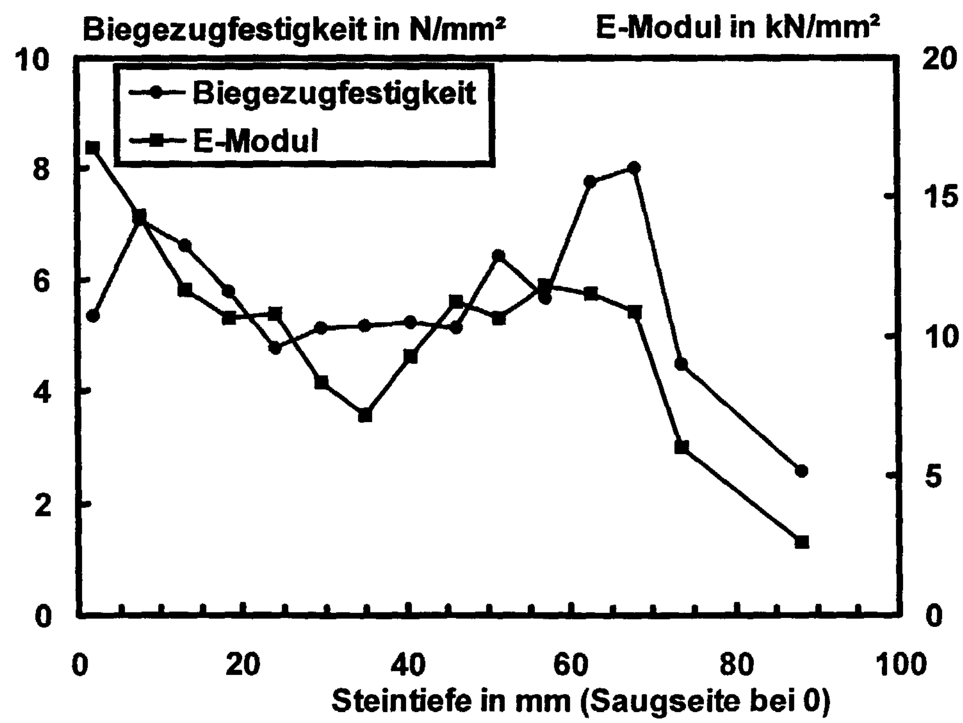


Bild 2: Biegezugfestigkeit und Elastizitätsmodul von Ebenheider Sandstein, mit Bis(triethoxysilylpropyl)disulfan (Wirkstoffgehalt: 50 %)getränkt

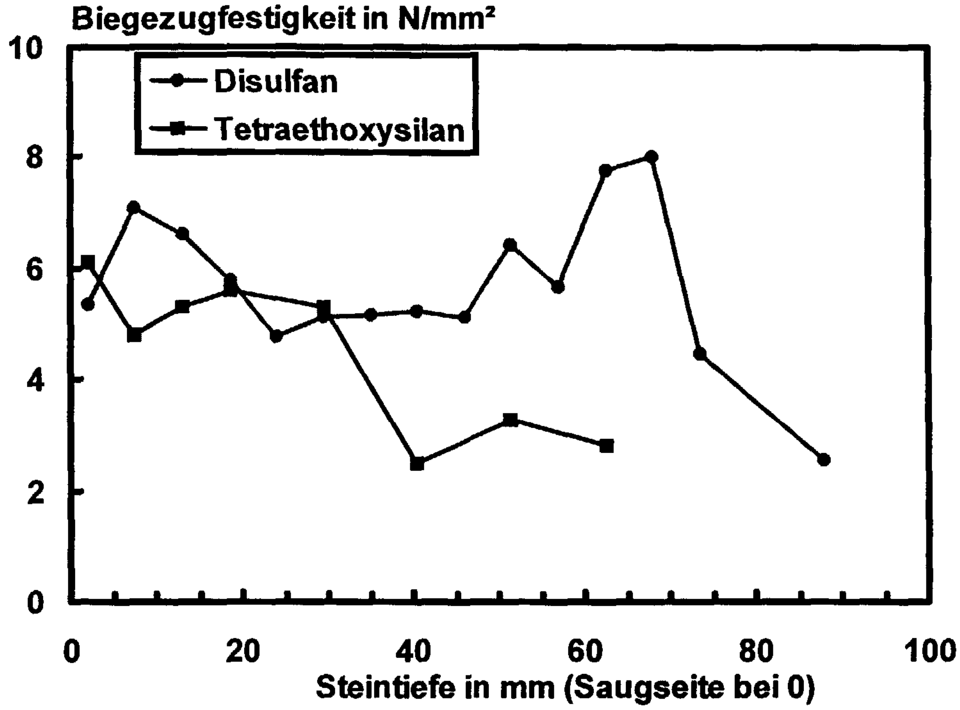


Bild 3: Biegezugfestigkeit eines mit Bis(triethoxysilylpropyl)disulfan und eines mit Tetraethoxysilan behandelten Ebenheider Sandsteins

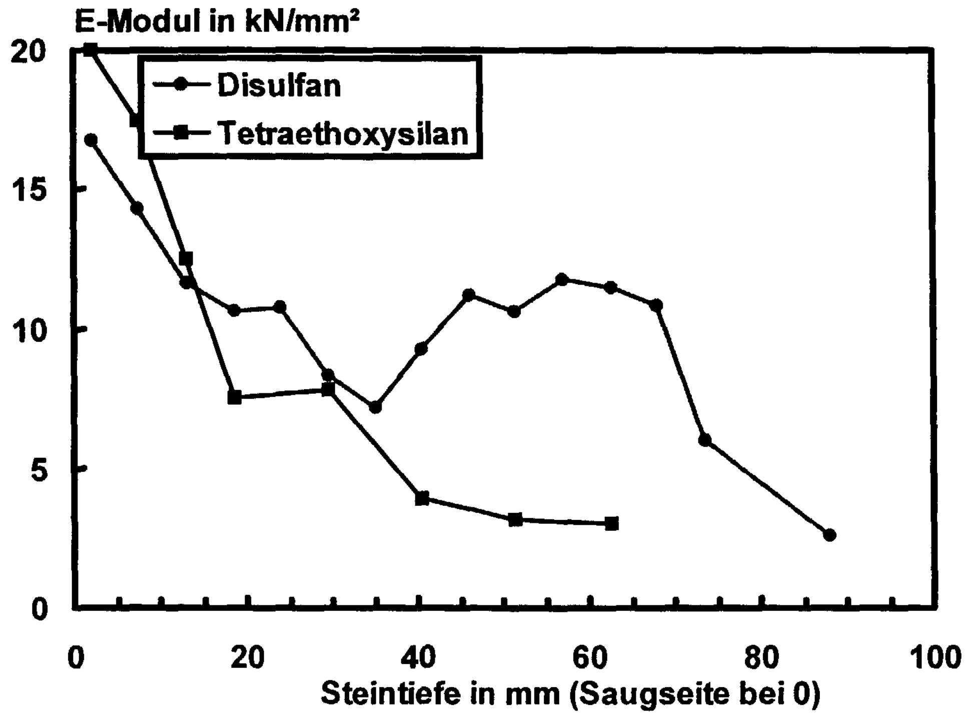


Bild 4: Elastizitätsmodul von mit Bis(triethoxysilylpropyl)disulfan und mit Tetraethoxysilan behandeltem Ebenheider Sandstein.

Europäisches Patentamt

# EUROPÄISCHER RECHERCHENBERICHT

Nummer der Anmeldung
EP 99 10 7246

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int.Cl.6) |
|---|---|---|---|
| X | DE 26 32 835 A (WACKER CHEMIE GMBH)<br>26. Januar 1978 (1978-01-26)<br>* Anspruch 1 *<br>* Seite 2, Zeile 24 - Seite 3, Zeile 49 *<br>* Seite 4, Zeile 71 - Seite 5, Zeile 98 *<br>* Seite 6, Zeile 130 - Zeile 135 *<br>* Seite 6, Zeile 139 - Zeile 145 *<br>* Seite 6, Zeile 160 - Seite 8, Zeile 208 *<br>* Seite 8, Zeile 219 - Seite 10, Zeile 5 *<br>* Seite 10, Zeile 26 - Zeile 30 *<br>* Beispiele 1,2 *<br>--- | 1,3-9 | C04B41/49<br>C07F7/18 |
| X | US 4 659 798 A (POHL ERIC R ET AL)<br>21. April 1987 (1987-04-21)<br>* Ansprüche 1-4,6 *<br>* Spalte 1, Zeile 64 - Spalte 2, Zeile 2 *<br>* Spalte 2, Zeile 65 - Spalte 3, Zeile 37 *<br>* Spalte 4, Zeile 42 - Zeile 57 *<br>* Spalte 5, Zeile 21 - Zeile 29 *<br>--- | 1,3,5-7,9 | |
| | | | **RECHERCHIERTE SACHGEBIETE (Int.Cl.6)** |
| X | DATABASE WPI<br>Section Ch, Week 8814<br>Derwent Publications Ltd., London, GB;<br>Class A25, AN 88-094554<br>XP002108625<br>& JP 63 043989 A (SUNSTAR GIKEN KK),<br>25. Februar 1988 (1988-02-25)<br>* Zusammenfassung * | 1,2,5,8 | C04B<br>C07F |
| A | --- | 9 | |
| X | DE 23 60 470 A (DYNAMIT NOBEL AG)<br>12. Juni 1975 (1975-06-12)<br>* Anspruch 1 *<br>----- | 1,2,5 | |

Der vorliegende Recherchenbericht wurde für alle Patentansprüche erstellt

| Recherchenort | Abschlußdatum der Recherche | Prüfer |
|---|---|---|
| DEN HAAG | 8. Juli 1999 | Rosenberger, J |

KATEGORIE DER GENANNTEN DOKUMENTE

X : von besonderer Bedeutung allein betracntet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument

& : Mitglied der gleichen Patentfamilie, übereinstimmendes Dokument

EPO FORM 1503 03.82 (P04C03)

## ANHANG ZUM EUROPÄISCHEN RECHERCHENBERICHT ÜBER DIE EUROPÄISCHE PATENTANMELDUNG NR. EP 99 10 7246

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

08-07-1999

| Im Recherchenbericht angeführtes Patentdokument | Datum der Veröffentlichung | Mitglied(er) der Patentfamilie | Datum der Veröffentlichung |
|---|---|---|---|
| DE 2632835 A | 26-01-1978 | AT 369353 B | 27-12-1982 |
| | | AT 524677 A | 15-05-1982 |
| | | BE 856926 A | 19-01-1978 |
| | | CA 1128685 A | 27-07-1982 |
| | | CH 631426 A | 13-08-1982 |
| | | FR 2359098 A | 17-02-1978 |
| | | GB 1524790 A | 13-09-1978 |
| US 4659798 A | 21-04-1987 | AT 69458 T | 15-11-1991 |
| | | CA 1300798 A | 12-05-1992 |
| | | CA 1317405 A | 04-05-1993 |
| | | DE 3682442 A | 19-12-1991 |
| | | EP 0206301 A | 30-12-1986 |
| | | JP 1771539 C | 30-06-1993 |
| | | JP 4060501 B | 28-09-1992 |
| | | JP 62011769 A | 20-01-1987 |
| | | JP 1917117 C | 23-03-1995 |
| | | JP 5092981 A | 16-04-1993 |
| | | JP 6043430 B | 08-06-1994 |
| | | US 4691038 A | 01-09-1987 |
| | | US 4725659 A | 16-02-1988 |
| JP 63043989 A | 25-02-1988 | JP 1804910 C | 26-11-1993 |
| | | JP 5013999 B | 23-02-1993 |
| DE 2360470 A | 12-06-1975 | BE 822501 A | 14-03-1975 |
| | | FR 2253753 A | 04-07-1975 |
| | | GB 1484909 A | 08-09-1977 |
| | | JP 50084534 A | 08-07-1975 |
| | | NL 7415865 A | 09-06-1975 |

EPO FORM P0461

Für nähere Einzelheiten zu diesem Anhang : siehe Amtsblatt des Europäischen Patentamts, Nr.12/82